# EUROPEAN PATENT APPLICATION

(11) **EP 0 903 102 A1**
(43) Date of publication of application: **24.03.1999**
(21) Application number: 97307357.0
(22) Date of filing: 22.09.1997
(51) Int. Cl.: A47J 47/00

(54) **Chopping board**

(71) Applicant: Hinton, Nigel Bruce, Windsor, Berkshire SL4 3EN (GB)
(72) Inventor: Hinton, Nigel Bruce, Windsor, Berkshire SL4 3EN (GB)
(74) Representative: Cline, Roger Ledlie

(57) **Abstract**

A generally rectangular chopping board 11 has along at least two adjacent sides an upper portion 15 and a lower portion 13, the lower portion containing a blind recess 14 extending only along a fraction of the length of the respective side. A side may also have an overhang 21 extending outwards above the lower portion for the whole length of that side. The overhang provides a platform from which material on the board can be projected onto the central area of a carrier plate 31; the roof of the recess 14 performs a similar function. The board makes it easier to avoid spillages of material from the plate after transfer from the board because the material is at least mainly away from the edge of the plate.

## Description

This invention relates to a chopping board which is intended to be placed on a working surface to protect the working surface from the cutting blade and to provide a receiving surface which will not blunt the cutting blade. Prior chopping boards have included cuboidal blocks of wood. When such blocks have straight edges, it is difficult to transfer chopped materials to a plate with a curved edge without spillage because of the gap which must occur between the edge of the block and the curved edge of the plate except at the point of contact. When the carrier has a straight edge, this problem is overcome provided that the carrier is correctly aligned with the block but even then some material may rest on the immediate edge of the carrier and fall off when the carrier is moved away.

In one aspect, invention provides a chopping board as set out in claim 1. The blind recess receives a carrier so that a wide range of the carrier is overhung by the upper periphery of the cutting block which reduces the chance of cut material failing to be transferred to the carrier or falling off its edge region when the carrier is moved away. When the carrier has a curved edge, it is preferable to match the curvatures of the carrier edge and recess wall, and the two recesses may be of different curvatures in order to accommodate to the best degree carrier of a variety of curvatures.

The board preferably further comprises on at least one side an upper portion overhanging an undercut portion, the undercut portion extending along the whole length of the side. The undercut portion enables a straight sided carrier to be placed next to the chopping board with the portion of the board overhanging the undercut overhanging the edge region of the carrier, so that cut material from the board will be deposited away from the edge region of the carrier, reducing the danger of cut material falling off the carrier when it is moved.

In another aspect the invention provides a chopping board as set out in claim 5. The widened end of a passageway acts in the same way as a blind recess of the chopping board according to the first aspect of the invention and the wall of the cutaway portion of a leg corresponds to the wall of the recess in the first aspect.

Examples of the invention will now be described with reference to the accompanying drawings in which:-
Figures 1 to 3 are perspective views of different embodiments of a chopping board,
Figures 4 and 5 are plans of carrier plates in relation to the boards of Figures 3 and 1 respectively, and
Figure 6 is an under plan view of another embodiment of a chopping board.

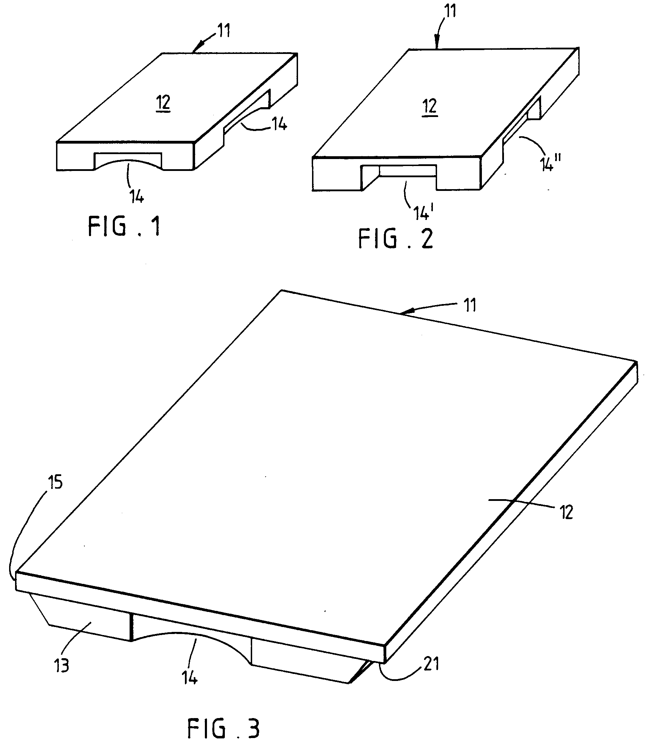

The chopping boards shown in Figures 1 to 3 are each a solid block of material 11 such as wood with an optional top coating or layer to provide a suitable chopping surface 12, the block being rectangular in plan, having sides of 30 and 35 cms and a height of 4 cms. At an intermediate region of the two adjacent sides which can be seen in the Figure, in this example the central region, the lower portion 13 of the block, which is otherwise uniform along the length of the side, is cut away to form a blind recess 14. Since the end regions of each side of the lower portion are not cut away, the board has a stable foundation. In Figure 1 the recesses each have a vertical curved wall arcuate in shape, ie it is part cylindrical with its axis normal to the top, working surface 12 of the board. The recess is of uniform section throughout the height of the lower portion. This enables carrier plates with curved peripheries to be brought a reasonable distance under the outer periphery of the chopping board so that an extended central region of the edge of the board will overhang the curved carrier plate and reduce the risk of chopped material failing to be caught by the carrier plate or having been caught, falling off it as it moved away. Ideally the curvature of the carrier plate should match that of the recess (and since many carrier plates are circular, this means the recess should have a part-cylindrical wall), but even a fair degree of inequality between the curvatures of the recess wall and the carrier plate will not defeat the object of the board. It is preferred that the two recesses are of different curvatures, to suit different curvatures of carrier plate. Recesses may be provided in other walls as well, if a greater variety of recess is required.

The height of the lower portion 13 of the board is preferably at least three quarters the total height of the board and should be sufficient to receive the full height of carrier plates generally in use. The height of the upper portion of the block, above the recess, should provide sufficient strength to avoid breakage when the board is lifted or knocked and usually allows the recess to occupy at least 75% of the total height of the board. The board height might be increased to as much as 8 cms when tall carrier plates have to be accommodated.

50 cms is a likely maximum side length. As dimensions increase, the weight of the chopping board becomes significant and it may be necessary to form the lower portion 13 of the chopping board as a hollow member, within the walls of the recesses. Smaller boards would normally be in one piece and of solid construction.

The board of Figure 2 is similar to that of Figure 1; its recesses 14', 14'' are rectangular, with straight sides. This may be easier to fabricate and can accommodate to a deeper degree narrow straight-sided carrier plates which will fit entirely within the width of the recess. One recess 14'' is located off-centre of its respective side. An alternative shape of recess, not illustrated, is V-shape.

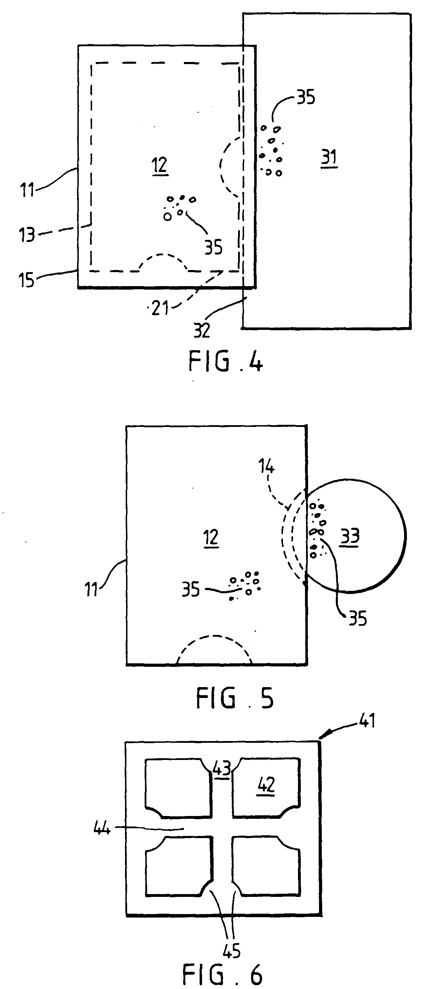

The board of Figure 3 adds to the features of Figures 1 and 2 an overhang 21 extending along the whole of two adjacent sides. The same two sides contain recesses 14. For symmetry, the overhang may extend along all four sides, and recesses may also be provided on all four sides, although only one can be seen in this Figure.

In Figure 3, each side edge has an upper vertical portion 15 with an intermediate horizontal portion extending inwardly from the overhang followed by a lower portion 13 which is bevelled at about 45 degrees to the vertical. This provides an undercut portion extending along the whole length of each side. The bevel angle of the lower portions of the sides of boards should preferably be below 60 degrees to the vertical, so that they could be exactly vertical, although a minimum inclination of 30 degrees to the vertical is preferred. The lower portion might be divided into an upper bevelled section and a lower vertical sided section.

As a general rule the sides with recesses need not be the same as that or those with an overhang extending along the whole of the respective side.

When a chopping board has two sides containing the recesses, it is possible to turn the board simply through ninety degrees to present a shallow or deep recess to the appropriate carrier plate. A rectangular board with unequal sides and overhangs along complete sides can also present faces of different length to overhang straight-edged carrier plates of different dimensions.

When a straight sided carrier plate is brought up to the chopping board as shown in Figure 4, the overhanging portion 21 can overhang the edge region of the carrier plate and enable chopped material to be transferred off the edge of the chopping board on to an interior region of the carrier plate without resting on the edge region 32 of the carrier plate and hence running the risk of falling off the carrier plate 31 when it is moved away. Figure 5 shows a circular carrier plate 33 fitted into a recess 14 of the board of Figure 1, showing how material 35 can be swept off the surface of the board onto the carrier plate 33, for the most part well away from its edge region.

In Figure 6 a chopping board is generally square in shape. The upper portion 41 is a continuous square providing a chopping surface on its upper side. On its underside, the lower portion is formed, consisting of four square section legs 42 separated by two transverse passageways 43, 44 extending across the whole width of the board.

Although each leg 42 is of generally square section, the corners adjacent the ends of the passageways are cut away for form recesses 45, the walls of the recesses being non-convex. In the example shown in Figure 6 the walls of the recesses are arcuate, the recesses on either side of one end of a passageway lying on the arc of a single circle. With this arrangement, a circular carrier plate can be slid under the overhanging upper portion to engage the recess portions of the adjacent legs so that chopped material on the chopping surface can then be deposited over the edge of the chopping board onto a region of the carrier well away from its edge so that when the carrier is removed, the material will be unlikely to fall off. If the recesses had not been provided on the legs the carrier plate could not have been inserted so far below the upper portion of the board. This enables the legs to be placed as close as possible to the outside edge of the upper portion for stability while still enabling the carrier to be inserted the maximum distance below the overhanging edge.

The legs could extend to the edge of the board, but in their recessed positions as illustrated they enable the upper portion of the board to provide an overhang 46 which is useful particularly when long straight sided carriers are used for the chopped material, as described above.

Alternative shapes of recess could be provided, for example plane chamfers, or rectangular recesses, the walls of the rectangular portions being parallel to the main walls of the legs.

The variations described with reference to Figure 1 to 5 can also be applied to the embodiment of Figure 6, for example the recesses in the legs at the end of one passageway may be differently curved from those at the end of an adjacent passageway in order to accommodate circular carrier plates of different radii.

## Claims

1. A chopping board which is generally rectangular in shape having an upper portion and a lower portion and which has a blind recess on at least two adjacent sides which extends only within the lower portion and only intermediate the ends of the lower portion.

2. A chopping board as claimed in claim 1 wherein at least one of the recesses has a curved wall.

3. A board as claimed in claim 2 wherein the curved wall is part-cylindrical with its axis normal to the top surface of the board.

4. A board as claimed in claim 2 or claim 3 wherein two recesses have curved walls of different curvature.

5. A chopping board comprising a continuous upper portion whose upper surface forms a chopping surface for the board and a lower portion which comprises a plurality of legs defining passageways therebetween, the end of a passageway adjacent an edge of the board being made wider by non-convex-walled recesses in the adjacent legs.

6. A board as claimed in claim 5 wherein the recesses on either side of one end of a passageway are symmetrically arranged about said passageway.

7. A board as claimed in claim 5 or claim 6 wherein the recesses on either side of one end of a passageway are formed by arcs of the same circle.

8. A board as claimed in claim 5 or claim 6 wherein a said recess has a plane wall.

9. A chopping board as claimed in any one of claims 1 to 8 wherein the lower portion is undercut relative to the upper portion on at least one side, the undercut lower portion extending along the whole length of the side.

10. A board as claimed in claim 9 wherein the undercut portion has a periphery inclined between 30 degrees and 60 degrees to the top surface of the board.

11. A board as claimed in claim 10 wherein the angle of inclination is 45 degrees.

12. A board as claimed in any one of claims 9 to 11 when dependent on claim 1 comprising a recess and an undercut portion on the same side.

13. A board as claimed in claim 12 comprising a recess and an undercut portion on each side.

14. A board which is generally rectangular in shape as claimed in any one of the preceding claims wherein each side has a length below 50 cms.

15. A board as claimed in any one of the preceding claims having a height not greater than 8 cms.
